# EUROPEAN PATENT SPECIFICATION

(11) **EP 1 849 995 B1**
(45) Date of publication and mention of the grant of the patent: **10.08.2011**
(21) Application number: 06008443.1
(22) Date of filing: 24.04.2006
(51) Int. Cl.: F02M 55/00, F02M 69/46, F16L 37/14

(54) **Coupling arrangement for mounting an injector in a fuel rail**
Kopplungsanordnung um ein Kraftstoffeinspritzventil in einem Kraftstoffverteiler zu montieren
Agencement pour monter une soupape d'injection dans une rampe d'injection de carburant

(43) Date of publication of application: 31.10.2007
(73) Proprietor: Continental Automotive GmbH, 30165 Hannover (DE)
(72) Inventor: Ricci, Roberto, 57121 Livorno (IT)

(56) References cited:
- WO-A-02/073025
- US-A- 3 317 220
- US-A1- 2004 195 834

## Description

The invention relates to an injector for a coupling arrangement and to coupling arrangements.

US 5,724,946 A discloses a fuel rail and injector assembly with a snap fastening arrangement.

US 3,317,220 A discloses a coupling body for a coupling arrangement, with the coupling body being cup-shaped, comprising a bottom portion with a fluid recess and a side portion with a first coupling recess which extends rectangular to an axis of the coupling body and which takes in a first coupling spring and a first ball in such a way that the first ball is coupled to the coupling body movable in axial direction of the first coupling recess and that the first ball is pressed towards the inside of the coupling body by the first coupling spring.

EP 0 969 203 A1 discloses a coupling system between an engine head, an injector, and a fuel manifold. The engine head has a seating designed to house the injector. The fuel manifold extends above the engine head and is connected to the injector through a bush projecting from the fuel manifold. The injector is coupled to the seating by means of a ball coupling. The fuel manifold is rigidly secured to the engine head of the engine. An opposing spring is interposed between the fuel manifold and the injector to compress the injector inside the seat.

WO 02/073025 A1 discloses a connection of two elements of a fuel supply system of an internal combustion engine that are coaxially disposed one behind the other. The connection is characterized in that the first element is preferably a receiving sleeve of a fuel distributor line with a guide opening and the second element is configured as a pressure balance valve or pressure dumper and can be inserted with a guide section in the guiding opening of the receiving sleeve. The receiving sleeve comprises two opposite retaining openings, disposed opposite in a wall and aligned with respect to each other and to a retaining groove in the pressure balance valve. The receiving sleeve extends with its legs through a U-shaped retaining clip, thereby fixing the position of the receiving sleeve relative to the pressure balance valve which are provided with sections from stainless steel at least in the area of the retaining clip. Alternatively, the first element can be an injection valve that is inserted with its one end in a plug-in connection of the fuel distributor line configuring the second element and that is fixed therein by means of a securing clip. The injection valve and the plug-in connection, at least in the area of the retaining clip, have sections from stainless steel. The retaining clip is formed by a string wire and the securing clip is formed by a stainless spring band steel in order to avoid contact corrosion.

The object of the invention is to create coupling arrangements, and an injector for the coupling arrangements for coupling the injector to a fluid supply which enables an assembly of the injector to the fluid supply in an easy way.

The object of the invention is achieved by the independent claims 1, 2 and 3.

The invention is distinguished concerning a first aspect of the invention: If an injector coupable to a coupling body of US 3,317,220 A, comprises a corresponding second coupling recess for the first ball, this enables a provisional fixation of the injector to the coupling body in a very simple way. In particular, if the coupling arrangement comprises the coupling body and if the corresponding injector is arranged in the coupling body, the first ball may partly be arranged in the corresponding second coupling recess of the injector. Then, the injector is fixed provisionally to the coupling body. The visional fixation may contribute to a proper rigid fixation of the injector to the fluid supply in a further assembling of the injector and/or the fluid supply.

The invention is distinguished concerning a second aspect of the invention by the injector for injecting fluid. The injector comprises a coupling section for coupling the injector to the coupling body of a coupling arrangement. The coupling section of the injector comprises the second coupling recess which extends rectangular to an axis of the coupling section of the injector. The second coupling recess takes in a second coupling spring and a second ball in such a way that the second ball is coupled to the injector movable in axial direction of the second coupling recess of the injector and that the second ball is pressed away from the injector by the second coupling spring.

If the injector is arranged in the coupling body in such a way that the second ball partly is arranged in the first coupling recess of the coupling body, this contributes to the provisional fixation of the injector to the fluid supply. The provisional fixation may contribute to the proper rigid fixation of the injector to the fluid supply in a further assembling of the injector and/or the fluid supply.

The invention is distinguished concerning a third.aspect of the invention by a coupling arrangement of a first type. The coupling arrangement comprises the injector and the coupling body, and at least a part of the fluid supply. The coupling body is cup-shaped, comprises the bottom portion with the fluid recess and the side portion with the first coupling recess which extends rectangular to the axis of the coupling body. The coupling body is fixed to the fluid supply communicating with the fluid supply via the fluid recess of the bottom portion. The second coupling recess, the second ball and the first coupling recess are formed and arranged in such a way that the second ball of the injector partly is arranged in the first coupling recess of the coupling body.

The invention is distinguished concerning a fourth aspect of the invention by a coupling arrangement of a second type. The coupling arrangement comprises the injector, the coupling body, and at least the part of the fluid supply. The coupling body is fixed to the fluid supply communicating with the fluid supply via the fluid recess of the bottom portion. The injector comprises the coupling section of the injector which has the second coupling recess which extends rectangular to the axis of the coupling section of the injector. The first ball, the first coupling recess, and the second coupling recess are formed and arranged in such a way that the first ball of the coupling body is partly arranged in the second coupling recess of the injector.

The invention is explained in the following with the help of schematic drawings.

These are as follows:
- FIG. 1: an injector and a fluid supply,
- FIG. 2: a first embodiment of a coupling arrangement,
- FIG. 3: a second embodiment of the coupling arrangement.

Elements with the same design and function that appear in the different illustrations are identified by the same reference characters.

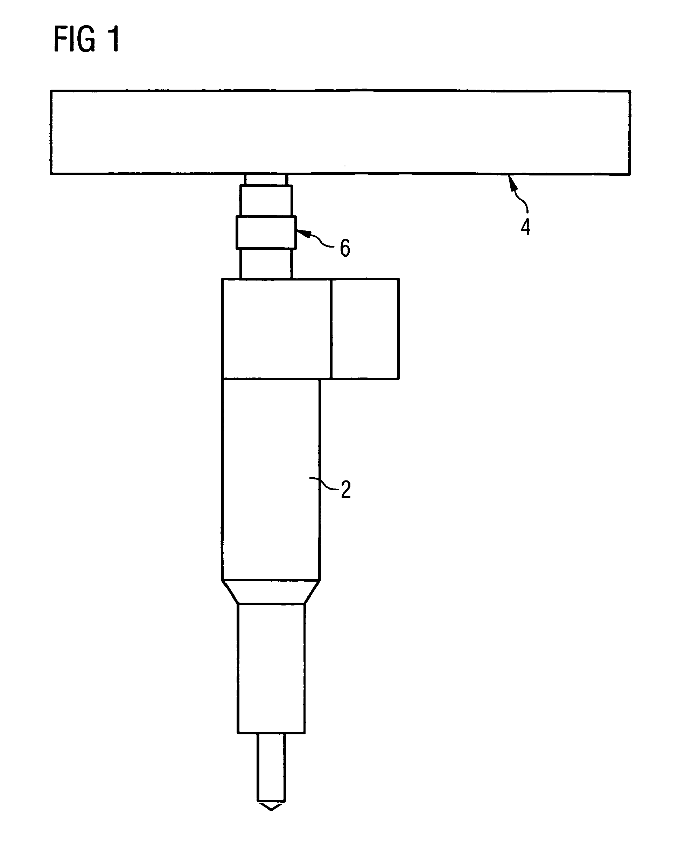

An injector 2 (figure 1) is connected to a fluid supply 4 via a coupling arrangement 6. The injector 2 is suited for injecting fluid, preferably, the injector is suited for injecting fuel into a combustion chamber of an internal combustion engine. Preferably, the fluid supply 4 is part of a common rail and communicates with a fuel tank.

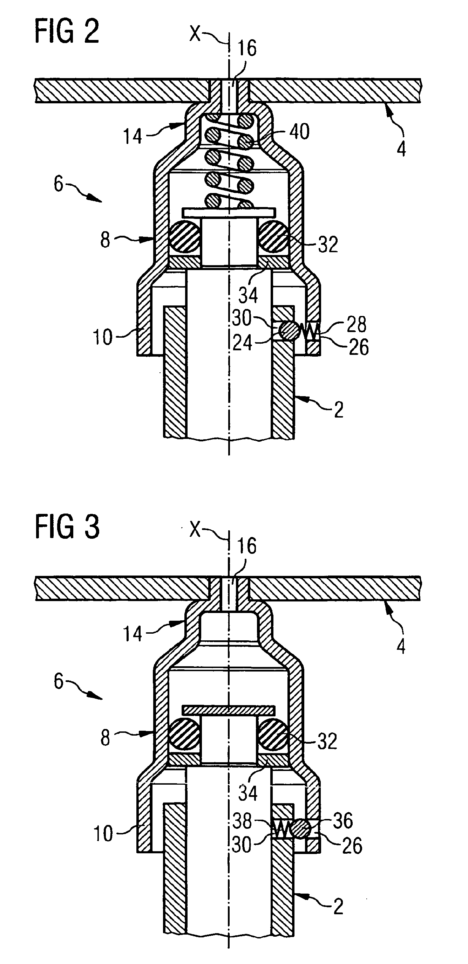

The coupling arrangement 6 comprises a coupling section of the injector 2, at least a part of the fluid supply 4, and a coupling body 8 (figure 2).

The coupling body 8 has a bottom portion 14 which has a fluid recess 16 and a side portion 10 which comprises a first coupling recess 26. The coupling body 8 communicates with the fluid supply 4 via the fluid recess 16. Preferably, the first coupling recess 26 extends primarily rectangular to an axis X of the coupling body 8.

Further, a first coupling spring 28 and a first ball 24 are formed and arranged in the first coupling recess 26 in such a way that the first ball 24 is pressed towards the inside of the coupling body 8 in order to fix the injector 2 provisionally to the coupling body 8.

The injector 2 comprises a second coupling recess 30 in the coupling section of the injector 2. Preferably, the second coupling recess 30 extends primarily rectangular to an axis of the coupling section of the injector 2. Preferably, the injector 2 and the coupling body 8 are sealed against the fluid by an O-ring seal 32 and/or a washer 34.

The first coupling recess 28 is arranged and formed in such a way that the first ball 24 is partly arranged in the second coupling recess 30. In that way, the injector 2 is provisionally fixed to the coupling body 8. This is especially advantageous if the injector 2 and the fluid supply 4 are preassembled and if after preassembling the injector 2 and the fluid supply 4 are assembled to the internal combustion engine, because then, the injector 2 is not able to fall apart from the fluid supply 4, however, the injector 2 may be forced further towards or away from the fluid supply 4 in its final position. Then, in it's final position the injector 2 may be fixed rigidly to the coupling body 8, for example by a coupling nut.

Preferably, there is a spring 40 arranged in the coupling body 8. Preferably, the spring 40 is fixed at one axial end of the spring 40 to the bottom portion 14 of the coupling body 8. Alternatively, instead of the spring 40 there may be arranged another flexible element. The spring 40 presses the injector in its seat in an engine head of the combustion engine.

In an alternative embodiment a second coupling spring 38 and a second ball 36 are arranged in the second coupling recess 30 (figure 3). The second coupling recess 30, the second spring 38 and the second ball 36 are formed and arranged in such a way that neither the second coupling spring 38 nor the second ball 36 can fall apart from the second coupling recess 30 and that the second ball 36 is pressed away from the injector 2 by the second coupling spring 38.

Further, the second coupling recess 30 is arranged and formed in such a way that the second ball 36 is partly arranged in the first coupling recess 26 of the injector 2. In that way, the injector 2 is provisionally fixed to the coupling body 8. This is especially advantageous if the injector 2 and the fluid supply 4 are preassembled and if after preassembling the injector 2 together with the fluid supply are assembled to the internal combustion engine, because then the injector 2 is not able to fall apart from the fluid supply 4 while enabling a further movement of the injector 2 towards or away from the fluid supply 4.

The invention is not restricted by the explained embodiments. For example, the different embodiments may be combined. There may be arranged the first and the second balls 24, 36 and the first and the second coupling spring 28, 38. However, then the first and the second coupling recesses 26, 38 are preferably arranged in non-overlapping areas and then there are further coupling recesses for acting together with the first and/or the second ball 24, 36. Further, the spring 40 may be arranged in the second embodiment of the coupling arrangement 6.

## Claims

1. Coupling arrangement (6) comprising
- an injector (2),
- a coupling body (8) said coupling body (8) being cup-shaped, comprising a bottom portion (14) with a fluid recess (16) and a side portion with a first coupling recess (26) **characterised in that** the first coupling recess (26) extends rectangular to an axis (X) of the coupling body (8) and takes in a first coupling spring (28) and a first ball (24) in such a way that the first ball (24) is coupled to the coupling body (8) movable in axial direction of the first coupling recess (26) and that the first ball (24) is pressed towards the inside of the coupling body (8) by the first coupling spring (28) and
- at least a part of a fluid supply (4), wherein
- the coupling body (8) is fixed to the fluid supply (4) communicating with the fluid supply (4) via the fluid recess (16) of the bottom portion (14),
- the injector (2) comprises a coupling section of the injector (2) which has a second coupling recess (30) which extends rectangular to an axis (X) of the injector (2),
- the first ball (24), the first coupling recess (26), and the second coupling recess (30) are formed and arranged in such a way that the first ball (24) of the coupling body (8) is partly arranged in the second coupling recess (30) of the injector (2).

2. Injector (2) for injecting fluid comprising a coupling section for coupling the injector (2) to a coupling body (8) of a coupling arrangement with the coupling section of the injector (2) comprising a second coupling recess (30) **characterised in that** the second coupling recess extends rectangular to an axis of the coupling section of the injector (2) and takes in a second coupling spring (38) and a second ball (36) in such a way that the second ball (36) is coupled to the injector (2) movable in axial direction of the second coupling recess (30) of the injector (2) and that the second ball (36) is pressed away from the injector (2) by the second coupling spring (38).

3. Coupling arrangement (6) comprising the injector (2) according to claim 2, a coupling body (8), and at least a part of a fluid supply (4), wherein
- the coupling body (8) is cup-shaped, comprises a bottom portion (14) with a fluid recess (16) and a side portion with a first coupling recess (26) **characterised in that** the first coupling recess (26) extends rectangular to the axis (X) of the coupling body (8),
- the coupling body (8) is fixed to the fluid supply (4) communicating with the fluid supply (4) via the fluid recess (16) of the bottom portion (14),
- the second coupling recess (30), the second ball (36) and the first coupling recess (26) are formed and arranged in such a way that the second ball (36) of the injector (2) partly is arranged in the first coupling recess (26) of the coupling body (8).

## Patentansprüche

1. Kopplungsanordnung (6) umfassend
- ein Einspritzventil (2),
- einen Kopplungskörper (8), wobei der genannte Kopplungskörper (8), der ein Unterteil (14) mit einer Aussparung (16) für Flüssigkeiten und ein Seitenteil mit einer ersten Kopplungsaussparung (26) enthält, becherförmig ist, **dadurch gekennzeichnet, dass** die erste Kopplungsaussparung (26) sich senkrecht zu einer Achse (X) des Kopplungskörpers erstreckt, und eine erste Koppelfeder (28) und eine erste Kugel (24) derart aufnimmt, dass die erste Kugel (24) beweglich in axialer Richtung der ersten Kopplungsaussparung (26) mit dem Kopplungskörper (8) verbunden ist, und dass die erste Kugel (24) durch die erste Koppelfeder (28) in Richtung der Innenseite des Kopplungskörpers (8) gedrückt wird und
- mindestens ein Teil einer Flüssigkeitszuführung (4), wobei
o der Kopplungskörper (8) kommunizierend mit der Flüssigkeitszuführung (4) durch die Aussparung (16) für Flüssigkeiten mit dem Unterteil (14) an der Flüssigkeitszuführung (4) befestigt ist,
o das Einspritzventil (2) einen Kopplungsabschnitt des Einspritzventils umfasst, der eine zweite Kopplungsaussparung (39) hat, die sich senkrecht zur Achse (X) des Einspritzventils (2) erstreckt,
o die erste Kugel (24), die erste Kopplungsaussparung (26) und die zweite Kopplungsaussparung (30) derart geformt und angeordnet sind, dass die erste Kugel (24) des Kopplungskörpers (8) teilweise in der zweiten Kopplungsaussparung (30) des Einspritzventils (2) angeordnet ist.

2. Einspritzventil (2) zum Einspritzen einer Flüssigkeit, das einen Kopplungsabschnitt zum Verbinden des Einspritzventils (2) mit einem Kopplungskörper (8) einer Kopplungsanordnung mit einem Kopplungsabschnitt des Einspritzventils (2) umfasst, der eine zweite Kopplungsaussparung (30) umfasst, **dadurch gekennzeichnet, dass** die zweite Kopplungsaussparung (30) sich senkrecht zu einer Achse des Kopplungsabschnitts des Einspritzventils (2) erstreckt und eine zweite Koppelfeder (38) und eine zweite Kugel (36) derart aufnimmt, dass die zweite Kugel (36) beweglich in axialer Richtung der zweiten Kopplungsaussparung (30) mit dem Einspritzventil (2) verbunden ist und dass die zweite Kugel (36) durch die zweite Koppelfeder von dem Einspritzventil (2) weggedrückt wird.

3. Kopplungsanordnung (6), die ein Einspritzventil (2) nach Anspruch 2, einen Kopplungskörper (8) und mindestens einen Teil einer Flüssigkeitszuführung (4) umfasst, wobei
- der Kopplungskörper (8) becherförmig ist, ein Unterteil (14) mit einer Aussparung (16) für Flüssigkeiten und ein Seitenteil mit einer ersten Kopplungsaussparung (26) umfasst, **dadurch gekennzeichnet, dass** die erste Kopplungsaussparung (26) sich senkrecht zur Achse (X) des Kopplungskörpers (8) erstreckt,
- der Kopplungskörper (8), der mit der Flüssigkeitszuführung über die Aussparung (16) für Flüssigkeiten des Unterteil (14) in Verbindung steht, an der Flüssigkeitszuführung angebracht ist,
- die zweite Kopplungsaussparung (30), die zweite Kugel (36) und die erste Kopplungsaussparung (26) derart geformt und angeordnet sind, dass die zweite Kugel (36) des Einspritzventils (2) teilweise in der ersten Kopplungsaussparung (26) des Kopplungskörpers (8) angeordnet ist.

## Revendications

1. Aménagement de couplage (6) comprenant :
- un injecteur (2),
- un corps de couplage (8), ledit corps de couplage (8) étant en forme de coupelle, comprenant une portion inférieure (14) avec un évidement de fluide (16) et une portion latérale avec un premier évidement de couplage (26), **caractérisé en ce que** le premier évidement de couplage (26) s'étend de manière rectangulaire par rapport à un axe (X) du corps de couplage (8) et reçoit un premier ressort de couplage (28) et une première bille (24) de sorte que la première bille (24) soit couplée au corps de couplage (8) mobile dans la direction axiale du premier évidement de couplage (26) et que la première bille (24) soit pressée vers l'intérieur du corps de couplage (8) par le premier ressort de couplage (28) et
- au moins une partie d'une alimentation en fluide (4), dans lequel
- le corps de couplage (8) est fixé à l'alimentation en fluide (4), communiquant avec l'alimentation en fluide (4) par l'intermédiaire de l'évidement de fluide (16) de la portion inférieure (14),
- l'injecteur (2) comprend une section de couplage de l'injecteur (2) qui a un second évidement de couplage (30) qui s'étend de manière rectangulaire par rapport à un axe (X) de l'injecteur (2),
- la première bille (24), le premier évidement de couplage (26) et le second évidement de couplage (30) sont formés et aménagés de sorte que la première bille (24) du corps de couplage (8) soit en partie aménagée dans le second évidement de couplage (30) de l'injecteur (2).

2. Injecteur (2) pour injecter du fluide, comprenant une section de couplage pour coupler l'injecteur (2) à un corps de couplage (8) d'un aménagement de couplage avec la section de couplage de l'injecteur (2) comprenant un second évidement de couplage (30), **caractérisé en ce que** le second évidement de couplage s'étend de manière rectangulaire par rapport à un axe de la section de couplage de l'injecteur (2) et reçoit un second ressort de couplage (38) et une seconde bille (36) de sorte que la seconde bille (36) soit couplée à l'injecteur (2) mobile dans la direction axiale du second évidement de couplage (30) de l'injecteur (2) et que la seconde bille (36) soit pressée à distance de l'injecteur (2) par le second ressort de couplage (38).

3. Aménagement de couplage (6) comprenant l'injecteur (2) selon la revendication 2, un corps de couplage (8), et au moins une partie d'une alimentation en fluide (4), dans lequel :
- le corps de couplage (8) est en forme de coupelle, comprend une portion inférieure (14) avec un évidement de fluide (16) et une portion latérale avec un premier évidement de couplage (26), **caractérisé en ce que** le premier évidement de couplage (26) s'étend de manière rectangulaire par rapport à l'axe (X) du corps de couplage (8),
- le corps de couplage (8) est fixé à l'alimentation en fluide (4), communiquant avec l'alimentation en fluide (4) par l'intermédiaire de l'évidement de fluide (16) de la portion inférieure (14),
- le second évidement de couplage (30), la seconde bille (36) et le premier évidement de couplage (26) sont formés et aménagés de sorte que la seconde bille (36) de l'injecteur (2) soit en partie aménagée dans le premier évidement de couplage (26) du corps de couplage (8).
